# EUROPÄISCHE PATENTSCHRIFT

(11) **EP 3 179 271 B1**
(45) Veröffentlichungstag und Bekanntmachung des Hinweises auf die Patenterteilung: **09.12.2020**
(21) Anmeldenummer: 15199685.7
(22) Anmeldetag: 11.12.2015
(51) Int. Cl.: G01S 17/36, G01S 17/66, G01S 7/481, G01S 7/497

(54) **TEC-MODUL MIT LASERDIODE ALS INTERFEROMETER-LASERSTRAHLQUELLE IN EINEM LASERTRACKER**
TEC-MODULE WITH LASER DIODE AS INTERFEROMETER LASER BEAM SOURCE IN A LASER TRACKER
MODULE TEC COMPRENANT UNE DIODE LASER COMME SOURCE DE RAYONNEMENT LASER D'INTERFÉROMÈTRE DANS UN APPAREIL DE SUIVI LASER

(43) Veröffentlichungstag der Anmeldung: 14.06.2017
(73) Patentinhaber: Leica Geosystems AG, 9435 Heerbrugg (CH)
(72) Erfinder: LÜTHI, Thomas, 5000 Aarau (CH)
(74) Vertreter: Kaminski Harmann

(56) Entgegenhaltungen:
- EP-A1- 1 923 818
- EP-A1- 2 589 982
- DE-A1- 19 933 518
- US-A1- 2012 320 943

## Beschreibung

Die Erfindung betrifft einen Lasertracker mit einem Interferometer und einer als Laserdiode ausgebildeten Laserstrahlquelle in einer thermo-elektrisch temperaturstabilisierten Zelle, nachfolgend TEC-Zelle genannt, zur Bestimmung einer Entfernungsänderung relativ zu einem Ziel nach dem Oberbegriff des Anspruchs 1 und ein Verfahren zum Bestimmen einer relativen Entfernung zum Ziel nach Anspruch 11.

Messvorrichtungen, die für eine fortlaufende Verfolgung eines Zielpunkts und eine koordinative Positionsbestimmung dieses Punkts ausgebildet sind, können allgemein unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z.B. mittels Laufzeit- oder Phasendifferenzmessung oder mittels des Fizeau-Prinzips, und - in modernen Systemen zunehmend standardisiert - auf einem Sensor eine Ablage des empfangenen Strahls von einer Nullposition ermittelt.

Mittels dieser so messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Lasertracker nach dem Stand der Technik können zusätzlich mit einer optischen Bilderfassungseinheit, insbesondere mit einem zweidimensionalen, lichtempfindlichen Sensor mit einer Bildverarbeitungseinheit ausgeführt sein, insbesondere mit einer Kamera deren Optik von der Optik des Laserstrahls getrennt angeordnet ist. Mit dem Erfassen und Auswerten eines Bildes - mittels Bilderfassungs- und Bildverarbeitungseinheit - eines so genannten Messhilfsinstruments mit Markierungen, deren relative Lage zueinander bekannt ist, kann so auf eine Orientierung eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Derartige Lasertracker und Verfahren für die 6DoF-Bestimmung, insbesondere mittels entsprechenden Messhilfsinstrumenten sind beispielsweise in der europäischen Patentanmeldung mit der Nr. 14179139.2 beschrieben.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung in der WO 2007/079600 A1 beschrieben.

Die in diesem Zusammenhang für die Distanzmessung eingesetzten Interferometer verwenden hauptsächlich - aufgrund der grossen Kohärenzlänge und der damit ermöglichten Messreichweite - als Lichtquellen HeNe-Gaslaser. Die Kohärenzlänge des HeNe-Lasers kann dabei einige hundert Meter betragen, so dass mit relativ einfachen Interferometer-Aufbauten die in der industriellen Messtechnik geforderten Reichweiten erzielt werden können. Eine Kombination eines Absolutdistanzmessers und eines Interferometers zur Entfernungsbestimmung mit einem HeNe-Laser ist beispielsweise aus der WO 2007/079600 A1 bekannt.

Nachteilig an der Verwendung von HeNe-Laserlichtquellen ist im Hinblick auf eine allgemein angestrebte Miniaturisierung von Lasertrackern jedoch deren die Lichtleistung bestimmende Grösse. Die Leistung der Lichtquelle hängt dabei signifikant von der Länge der Laserröhre ab, d.h. je länger die Röhre desto grösser die erreichbare Emissionsleistung. Zudem zeigt eine derartige Laserquelle gewöhnlich eine relativ grosse Leistungsdissipation. Einen weiteren Nachteil stellt die für den Betrieb benötigte Hochspannungsversorgung dar. Beispielsweise muss für die Zündung des Lasers eine Spannung von ca. 7'000V und während des Betriebs eine Spannung von ca. 1'500V bereitgestellt werden, wodurch bei der Verwendung solcher Lichtquellen spezielle Komponenten (z.B. Hochspannungsnetzteil und Abschirmung) eingesetzt und Sicherheitsmassnahmen getroffen werden müssen. Auch die Empfindlichkeit gegenüber Magnetfeldern (z.B. erzeugt durch interne Motoren oder externe Schweisstrafos) und die begrenzte Lebensdauer der Röhren (typischerweise ca. 15'000 Betriebsstunden) gestalten den Einsatz von HeNe-Lasern nachteilig - beispielsweise da die Lichtquellen oft kostspielig in den Systemen ersetzt werden müssen.

Prinzipiell können HeNe-Laser als Lichtquelle für das Interferometer durch Diodenlaser ersetzt werden. Diese sind an sich kompakt, kostengünstig und haben einen geringen Leistungsverbrauch. Insbesondere für die Verwendung als Interferometerlichtquelle werden oft folgende Laserdiodenquellen eingesetzt:
- Distributed Feedback Laser (DFB) (mit einem periodisch strukturierten aktiven Medium, z.B. Gitter),
- Distributed Bragg Reflector Laser (DBR) (mit einem optischen Gitter ausserhalb des aktiven Mediums aber auf einem gemeinsamen Chip angeordnet),
- Fiber Bragg grating laser (FBG) (im Wesentlichen gemäss einem DFB-Laser, jedoch mit einem Gitter in einer externen Faser),
- External Cavity Diode Laser (ECDL) (Stabilisierung der Laserdiode mittels einer externen hochstabilen Kavität z.B. mit einem holografischen Gitter),
- Diode pumped solid state lasers (DPSS),
- Discrete mode lasers (DMD),
- Microchip Laser, und/oder
- Oberflächenemitter Laser (VCSEL).

Die Strahlquellen sind dabei derart ausgebildet, dass der emittierte Laserstrahl hinsichtlich der Wellenlänge singlemodig mit einer Kohärenzlänge in der Grössenordnung von mehreren 10m (bzw. einer Linienbreite < 1MHz) ist. Anordnungen und Ansätze aus artfremden optischen Systemen wie z.B. etwa beim Barcodelesegeräten aus DE 199 33 518 oder EP 1 923 818 sind für hochpräzise Interferometer gänzlich ungeeignet, insbesondere da bei diesen die technischen Anforderungen in jeglicher Hinsicht gänzlich andere sind. US20120320943 offenbart einen Lasertracker, der mittels Verwendung der Motoren als Heizelemente auf eine bestimmte Temperatur gebracht wird, um die Anzielgenauigkeit zu verbessern, bzw. zu stabilisieren.

Für die Verwendung solcher Laserdioden als Interferometerlichtquelle oder als Wellenlängennormal ist zusätzlich eine Stabilisierung auf eine bekannte Wellenlänge erforderlich. Diese kann z.B. spektroskopisch auf eine Absorptionslinie eines Absorptionsmediums erfolgen (z.B. unter Verwendung einer Gaszelle). In Abhängigkeit des verwendeten Absorptionsmediums können dabei in einem gewünschten Wellenlängenbereich sehr viele Absorptionslinien auftreten. Einerseits liegen dann so viele Absorptionslinien vor, dass auch bei fertigungsbedingter Streuung der Emissionswellenlänge der Laserdiode stets eine Absorptionslinie zur Stabilisation erreichbar ist, andererseits muss diese Linie aber auch bei jedem Aufstarten der Lichtquelle zur Feststellung der Emissionswellenlänge eindeutig identifiziert werden.
Hierfür kann prinzipiell einfach auf irgendeine geeignete und definierte Linie stabilisiert und diese in der Produktion mit einem externen Wellenlängenmessgerät identifiziert werden. Mittels Speicherung und Wiedererstellung der dazu eingestellten Diodenparameter wie z.B. Temperatur und Strom, sollte man bei perfekter Ansteuerelektronik wieder bei der ursprünglichen Line landen und diese mit einem kurzen Wellenlängenscan wieder finden. Eine eventuelle Veränderung der Einstellparameter der Diode durch Alterung kann durch Abspeicherung der jeweils letzten Werte abgefangen werden.

Die Anforderungen an das Messgerät sind analog auf Messvorrichtungen übertragbar, welche eine Interferometereinheit zur Bestimmung von Entfernungsänderungen aufweisen. Dabei können Messvorrichtungen, die für eine fortlaufende Verfolgung eines Zielpunkts und eine koordinative Positionsbestimmung dieses Punkts ausgebildet sind, allgemein unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von dem Messgerät zum Zielpunkt, z.B. mittels Laufzeit- oder Phasendifferenzmessung ermittelt.

Eine Verwendung einer Laserdiode als Interferometer-Laserlichtquelle ist beispielsweise in der europäischen Patentanmeldung EP 2 589 982 beschrieben. Die europäischen Patentanmeldungen EP 2 662 661 und EP 2 662 702 beschreiben weiter abstimmbare Laserdioden zur Stabilisierung der Emissionswellenlänge für die Verwendung in einem Lasertracker, insbesondere wobei eine eindeutige Identifizierung einer zur Stabilisierung verwendeten Absorptionslinie, insbesondere bei jedem Aufstarten des Systems, durchführbar ist. Schliesslich beschreibt die europäische Patentanmeldung mit der Nr. 14179139.2 ein Komplettsystem für ein gattungsgemässes Koordinatenmessgerät zur Vermessung von Koordinaten auf Oberflächen von Zielobjekten, insbesondere ausgestaltet mit einem Lasertracker mit einer Laserdioden-Strahlquelle.

Die Verwendung einer spezifischen Laserdiode mit dem Interferometer des Lasertrackers bietet Vorteile hinsichtlich des damit verbunden Platzbedarfs, der gegenüber einem HeNe-Gaslaser deutlich geringer ausfällt bei jedoch ebenfalls grosser Kohärenzlänge. Im Gegensatz zu einer Gaslaserquelle, die zwar ebenfalls Messstrahlung mit geeigneter Kohärenzlänge bereitstellen kann, wird für den Betrieb der Diode zudem keine Hochspannungsversorgung benötigt. Des Weiteren weisen derartige Laserdioden einen geringeren Energieverbrauch auf.

Gattungsgemässe Lasertrackersysteme mit Laserdioden nach dem Stand der Technik verfügen des weiteren üblicherweise über eine spezifische Ansteuerung der Laserdiode, in dessen Zusammenhang der Lasertracker und die Steuerungseinheit der Laserdiode derart ausgebildet sind, dass die Emissionswellenlänge der Messstrahlung innerhalb eines bestimmten Emissionswellenlängenbereichs longitudinal monomodig variierbar ist. Dabei kann die Emissionswellenlänge durch eine Temperaturänderung der Laserdiode und/oder eine Änderung eines an der Laserdiode anliegenden elektrischen Stroms gesteuert durch die Steuerungseinheit variierbar sein. Ferner kann vermittels der Steuerungseinheit die Laserdiode derart ansteuerbar sein, dass eine Emissionsleistung der Messstrahlung variierbar ist.

Ein üblicher Aufbau einer Laserdiodenstrahlquelle in einem Freistrahlsetup nach dem Stand der Technik umfasst üblicherweise eine Laserdiode mit Kollimationsoptik, einen Freistrahlisolator und eine Einkopplung in eine optische Faser, wobei sich üblicherweise die Diode und die Kollimationsoptik in einer thermo-elektrisch temperaturstabilisierten Zelle (TEC-Zelle) befinden. Bei der Verwendung eines solchen Setups in einem Lasertracker ist es aber insbesondere nachteilig, dass aufgrund des grossen Betriebstemperaturumfangs im Lasertracker die Pointingstabilität eine aktive Steuerung der Strahlrichtung erfordert, um die Einkopplungseffizienz in die Faser zu halten. Neben der damit verbundenen komplexen Ansteuerung und Kalibrierung der Laserstrahlquelle wird damit zudem eine weitere Optimierung des benötigten Platzbedarfs im Lasertracker limitiert. Eine weitergehende Miniaturisierung einer solchen Laserdiodenstrahlquelle ist deshalb meist nur unter Laborbedingungen umsetzbar.

Es ist deshalb eine Aufgabe der vorliegenden Erfindung, eine verbesserte Laserstrahlquelle in einem Lasertracker bereitzustellen, wobei die Mittel zur Erzeugung einer Laserstrahlung zur Entfernungsmessung in ihrer Gesamtheit kompakter ausgebildet sind und eine zur Entfernungsbestimmung emittierte Laserstrahlung dabei derart erzeugbar ist, dass die Emissionswellenlänge der Messstrahlung innerhalb eines bestimmten Emissionswellenlängenbereichs longitudinal monomodig variierbar ist.

Eine spezielle Aufgabe der Erfindung ist es einen Lasertracker mit einer hinsichtlich des Platzbedarfs verbesserten Entfernungsmesseinheit bereitzustellen, wobei eine geforderte Präzision bei einer gleichzeitig geforderten Messreichweite von mindestens 10m für die Entfernungsbestimmung mindestens erhalten bleibt.

Eine weitere spezielle Aufgabe der Erfindung ist es, einen Lasertracker mit einem Interferometer als Distanzmesser bereitzustellen, wobei die optischen Komponenten, insbesondere die Strahlquelle und dafür vorzusehende Versorgungseinheiten, gegenüber dem Stand der Technik einen deutlich geringeren Platzbedarf aufweisen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung beschreibt einen Lasertracker zur fortlaufenden Verfolgung eines reflektierenden Ziels und zur Entfernungsbestimmung zu dem Ziel mit einer als Interferometer ausgebildeten Entfernungsmesseinheit zur Bestimmung einer Entfernungsänderung zum Ziel mittels Interferometrie, einer als Laserdiode ausgebildeten Laserstrahlquelle zur Erzeugung einer Messstrahlung für das Interferometer, einer eine Stehachse definierenden Basis, einer Strahllenkeinheit zur Emission der Messstrahlung und zum Empfang von zumindest einem Teil der am Ziel reflektierten Messstrahlung, wobei die Strahllenkeinheit um die Stehachse und eine im Wesentlichen orthogonal zur Stehachse stehende Neigungsachse relativ zur Basis motorisiert schwenkbar ist, und einer Winkelmessfunktionalität zur Bestimmung einer Ausrichtung der Strahllenkeinheit relativ zur Basis, wobei der Lasertracker dadurch gekennzeichnet ist, dass die Laserstrahlquelle in einer thermo-elektrisch temperaturstabilisierten Zelle, nachfolgend TEC-Zelle genannt, integriert ist, wobei mindestens folgende Komponenten innerhalb der TEC-Zelle angeordnet sind:
- eine Laserdiode,
- Kollimationsoptik,
- eine optische Mini-Isolatoreinheit, und
- mindestens eine polarisationserhaltende Fasereinkopplung für die Messstrahlung für das Interferometer.

Die Temperaturstabilisierung kann hierbei sowohl mittels einer Kühlung wie auch einer Erwärmung durch die TEC-Zelle erfolgen. Insbesondere ist dem Fachmann klar, dass eine TEC-Zelle ebenfalls (oder auch ausschliesslich) zum Erwärmen verwendet werden kann, auch wenn die Abkürzung TEC von "Thermo-Electric Cooler" abgeleitet wird.

Vermittels der Temperaturregulierung durch die TEC-Zelle wird hauptsächlich die Wellenlänge der erzeugten Laserstrahlung stabilisiert. Die Integration der Kollimationsoptik, der Mini-Isolatoreinheit, und der Fasereinkopplung in die temperaturstabilisierte TEC-Zelle hat dabei aber insbesondere auch den zusätzlichen Vorteil, dass somit beispielsweise eine geeignete Einkopplungseffizienz der Laserstrahlung in die mindestens eine Fasereinkopplung sichergestellt wird, insbesondere ausschliesslich durch die Temperaturregulierung der TEC-Zelle. Eine aktive Steuerung der Strahlrichtung, wie bei herkömmlichen Laserquellen aus dem Stand der Technik üblich, um die Einkopplungseffizienz in die Faser zu halten, ist deshalb nicht mehr erforderlich und der damit reduzierte mechanische und elektronische Aufwand ermöglicht beispielsweise eine weitere Miniaturisierung der Laserdiodenstrahlquelle und damit eine Optimierung des Platzbedarfs im Lasertracker.

Hinsichtlich der mit der Laserdiode emittierten Wellenlänge sind Emissionsspektralbereiche vorteilhaft, welche im sichtbaren optischen Bereich, insbesondere im "roten Wellenlängenbereich", oder im nahen Infrarotbereich liegen. Beispielsweise kann in einer Ausführung mit einer Emissionswellenlänge im sichtbaren Wellenlängenbereich das emittierte rote Laserlicht der Laserstrahlquelle nicht nur für interferometrische Messungen sondern auch als Markierungslicht verwendet werden. Mit der Erzeugung eines roten Spots auf einem Zielobjekt kann beispielsweise einem Benutzer des Lasertrackers ein Anzielpunkt visuell sichtbar gemacht werden. Weiter bieten Laserdioden im roten Wellenlängenbereich insbesondere auch Platzbedarfsvorteile gegenüber alternativen Strahlquellen und damit einsetzbaren Stabilisierungseinheiten, die im roten Wellenlängenbereich emittieren.

Eine weitere Ausführungsform der Erfindung ist deshalb dadurch gekennzeichnet, dass die Emissionswellenlänge der Messstrahlung zwischen 500nm und 800nm, insbesondere zwischen 630nm und 635nm, oder zwischen 850nm und 900nm, insbesondere zwischen 850nm und 855nm oder zwischen 892nm und 896nm, liegt.

Eine weitere Optimierung des Platzbedarfs im Lasertracker kann mit einem modularen Aufbau der Laserstrahlquelle erzielt werden. Erfindungsgemäss werden deshalb in einer weiteren Ausführungsform folgende zusätzlichen Komponenten innerhalb der TEC-Zelle angeordnet:
- mindestens ein Strahlteiler zur Erzeugung der Messstrahlung für das Interferometer und mindestens einer weiteren Zusatzstrahlung, insbesondere einer Referenzstrahlung für das Interferometer, und
- mindestens eine zusätzliche Fasereinkopplung für die mindestens eine weitere Zusatzstrahlung.

In einer weiteren Ausführungsform weist die optische Mini-Isolatoreinheit in der TEC-Zelle zwei Mini-Isolatoren auf, welche so angeordnet sind, dass die durch die Laserdiode erzeugte Strahlung dahingehend adaptiert wird, dass eine senkrechte oder parallele Orientierung der Polarisationsebene der Strahlung relativ zum mindestens einen Strahlteiler erzeugt wird. Dies ist insbesondere vorteilhaft, da die Strahlteiler üblicherweise keine polarisationserhaltende Schicht aufweisen.

Gemäss der vorliegenden Erfindung wird die TEC-Zelle in einer weiteren Ausführungsform vermittels einer Kontroll- und Steuerungseinheit kontrolliert, welche eine vordefinierte optimierte Einkopplungseffizienz der Messstrahlung in die mindestens eine Fasereinkopplung der TEC Zelle sicherstellt, insbesondere vermittels einer Temperaturregulierung der TEC-Zelle. Speziell im Zusammenspiel mit einer allfällig vorhandenen externen Selbstausgleichseinheit für die Initialisierung des Lasertrackers, respektive der TEC-Zelle, ermöglicht diese Ausführungsform einen modularen Einsatz der Laserstrahlquelle in verschiedenen bevorzugten Ausführungsformen eines Lasertrackersystems, insbesondere hinsichtlich Platzbedarf und optischem sowie elektronischem Aufwand. Eine solche Selbstausgleichseinheit kann beispielsweise, auf einem Auslegearm des Lasertracker-Gehäuses angebracht sein und einen oder mehrere Spiegel, Reflektoren und/oder Sensoren enthalten. Besonders vorteilhafte (hier nicht dargestellte) Ausgestaltungen einer Selbstausgleichseinheit sind insbesondere in den Europäischen Patentanmeldungen EP 2 687 866 A1, EP 2 746 806 A1 und EP 2 746 807 A1 ausführlich beschrieben.

Die modulare Einsetzbarkeit der Laserstrahlquelle in verschiedenen Messsystemen wird insbesondere durch eine weitere spezielle Ausführungsform verdeutlicht, wobei die TEC-Zelle und die Kontroll- und Steuerungseinheit der TEC-Zelle in einem einzelnen Gehäuse integriert sind und die Laserstrahlquelle vermittels der Kontroll- und Steuerungseinheit der TEC-Zelle für einen allein stehenden Betrieb vorkalibriert ist.

Erfindungsgemäss kann die Laserdiode ausgestaltet sein als eine Bragg-Spiegel-Laserdiode (DBR-Laserdiode), ein Distributed Feedback Laser (DFB-Laser), eine Fabry-Perot-Laserdiode mit nachgeschaltetem volumen-holographischen Gitter (VHG), oder als ein Oberflächenemitter (VCSEL).

In einer weiteren Ausführungsform weist der Lasertracker zumindest eine optische Faser auf, wobei die Messstrahlung und/oder die mindestens eine Zusatzstrahlung vermittels optischer Fasern führbar sind, insbesondere wobei die durch die Laserstrahlquelle erzeugbaren Strahlungen in optische Fasern eingekoppelt werden. Mittels der Strahlführung durch eine optische Faser können beispielsweise optische Komponenten in unterschiedlichen Teilen des Lasertrackers angeordnet sein. So kann die Flexibilität hinsichtlich des strukturellen Aufbaus des Trackers erhöht werden.

In einer speziellen Ausführungsform des Lasertrackers weist dieser zudem eine Wellenlängenstabilisierungseinheit zur Stabilisierung der von der Laserstrahlquelle erzeugten Messstrahlung auf, sodass die Emissionswellenlänge fortlaufend innerhalb eines definierten Wellenlängenbereichs vorliegt, insbesondere wobei die Wellenlängenstabilisierungseinheit als Absorptionszelle ausgebildet ist, insbesondere wobei der Lasertracker eine optische Verbindungsfaser zur Verbindung der Wellenlängenstabilisierungseinheit mit der Laserstrahlquelle aufweist. Dies ermöglicht beispielsweise eine eindeutige Identifizierung einer zur Stabilisierung verwendeten Absorptionslinie, insbesondere bei jedem Aufstarten des Systems, oder ermöglicht ein fortlaufendes Monitoring des Systemzustands oder eine Anpassung der gewünschten Emissionswellenlänge der Messstrahlung, insbesondere wobei die Emissionswellenlänge der Messstrahlung innerhalb eines bestimmten Emissionswellenlängenbereichs longitudinal monomodig variierbar ist.

Idealerweise wird der Spektralbereich der Emissionswellenlänge mit dem Spektralbereich der verwendeten Absorptionszelle so abgestimmt, dass ein möglichst breiter Wellenlängenüberlapp zwischen den beiden Spektralbereichen erzielt wird. Häufig verwendete Absorptionszellen arbeiten insbesondere in folgenden Bereichen:
- 532nm - 770nm (J Absorptionslinien),
- 760nm (O Absorption),
- 780nm - 795nm (Rb-Absorptionslinien).

Eine weitere Ausführungsform der Erfindung beschreibt einen Lasertracker der eine um die Stehachse relativ zur Basis schwenkbare Stütze aufweist und wobei die Strahllenkeinheit als um die Neigungsachse relativ zur Stütze schwenkbare Anzieleinheit ausgebildet ist.

In dieser Ausführungsform sind weitere Verkörperungen möglich, welche je nach Platzbedarf, Mechanik, Wärmeentwicklung, oder Elektronik allenfalls zu bevorzugen sind, z.B.
- dass die Laserstrahlquelle in der Anzieleinheit oder der Stütze angeordnet ist, oder
- die Laserstrahlquelle in der Anzieleinheit oder der Stütze angeordnet ist und gleichzeitig eine Wellenlängenstabilisierungseinheit in der Anzieleinheit oder der Stütze angeordnet ist, wobei gegebenenfalls die Messstrahlung und/oder die mindestens eine Zusatzstrahlung mittels optischer Fasern in die Stütze und/oder die Anzieleinheit einkoppelbar sind.

Weiter betrifft die Erfindung die Verwendung einer erfindungsgemässen Laserstrahlquelle in einer als Interferometer ausgebildeten Entfernungsmesseinheit eines Lasertrackers zur Bestimmung einer Entfernungsänderung zu einem Ziel durch Interferometrie mittels der durch die Laserstrahlquelle erzeugbaren Messstrahlung.

Die Erfindung umschliesst weiter ein Verfahren zum Bestimmen einer Entfernungsänderung zu einem Ziel mittels Interferometrie mit einem Lasertracker mit einer eine Stehachse definierenden Basis, einer Strahllenkeinheit zum Emittieren einer Messstrahlung und zum Empfangen von zumindest einem Teil der am Ziel reflektierten Messstrahlung, wobei die Strahllenkeinheit um die Stehachse und eine im Wesentlichen orthogonal zur Stehachse stehende Neigungsachse relativ zur Basis motorisiert schwenkbar ist, einer als Interferometer ausgebildeten Entfernungsmesseinheit zum Bestimmen einer Entfernungsänderung zum Ziel mittels Interferometrie und einer als Laserdiode ausgebildeten Interferometer-Laserstrahlquelle zum Erzeugen der Messstrahlung für das Interferometer, sowie mit einem Emittieren der Messstrahlung, einem Empfangen des zumindest einen Teils der am Ziel reflektierten Messstrahlung und dem Bestimmen der relativen Entfernung, wobei das Verfahren dadurch gekennzeichnet ist, dass die Laserstrahlquelle in einer thermo-elektrisch temperaturstabilisierten Zelle, nachfolgend TEC-Zelle genannt, integriert ist, wobei mindestens folgende Komponenten innerhalb der TEC-Zelle angeordnet sind:
- eine Laserdiode,
- Kollimationsoptik,
- eine optische Mini-Isolatoreinheit, und
- mindestens eine polarisationserhaltende Fasereinkopplung für die Messstrahlung für das Interferometer.

Eine weitere Ausführungsform des Verfahrens ist ferner dadurch gekennzeichnet, dass ein Stabilisieren der von der Laserstrahlquelle erzeugten Messstrahlung derart erfolgt, dass die Emissionswellenlänge fortlaufend innerhalb eines definierten Toleranzbereichs für die Wellenlänge vorliegt.

Der erfindungsgemässe Lasertracker und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine erfindungsgemässe Anordnung für eine Laserdiodenstrahlquelle in einer TEC-Zelle;
- Fig.2: eine erfindungsgemässe optische Anordnung für einen Lasertracker mit einem Interferometer und einer Laserstrahlquelle zur Erzeugung einer Messstrahlung für das Interferometer;
- Fig.3: eine beispielhafte Ausführungsform eines erfindungsgemässen Lasertrackers;
- Fig.4: eine weitere Ausführungsform eines erfindungsgemässen Lasertrackers mit der Laserstrahlquelle angeordnet in einer Stütze einer Anzieleinheit;
- Fig.5: eine weitere Ausführungsform eines erfindungsgemässen Lasertrackers mit der Laserstrahlquelle angeordnet in der Anzieleinheit;
- Fig.6: eine weitere Ausführungsform eines erfindungsgemässen Lasertrackers mit der Laserstrahlquelle angeordnet in der Stütze, sowie einer Wellenlängenstabilisierungseinheit in der Stütze;
- Fig.7: eine weitere Ausführungsform eines erfindungsgemässen Lasertrackers mit der Laserstrahlquelle angeordnet in der Stütze, sowie einer Wellenlängenstabilisierungseinheit angeordnet in der Anzieleinheit;
- Fig.8: eine weitere Ausführungsform eines erfindungsgemässen Lasertrackers mit der Laserstrahlquelle angeordnet in der Anzieleinheit, sowie einer Wellenlängenstabilisierungseinheit angeordnet in der Stütze;

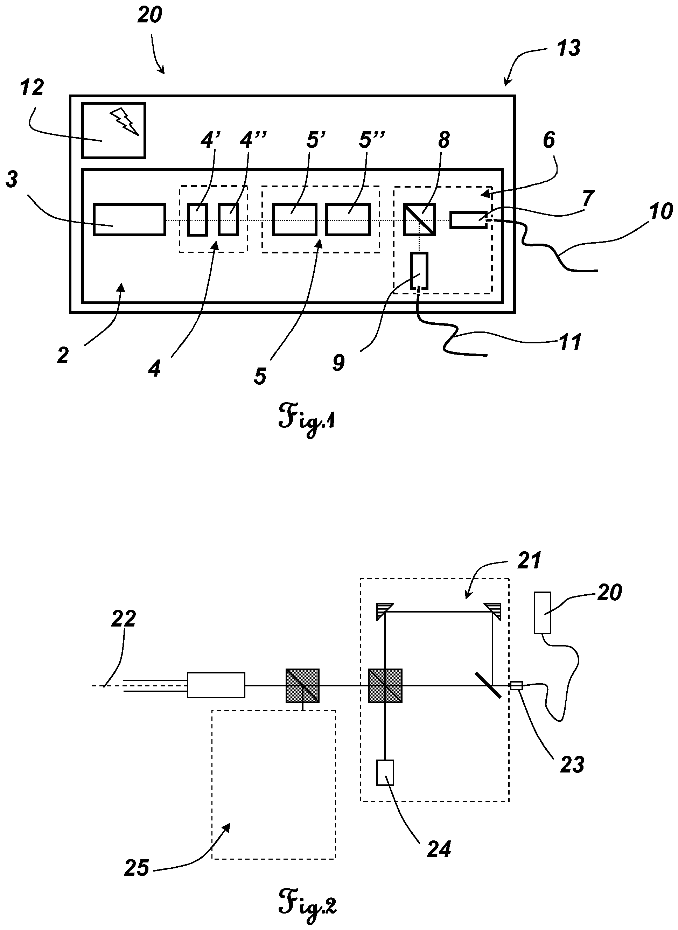

Figur 1 zeigt eine erfindungsgemässe Anordnung für eine Laserstrahlquelle 20 mit einer Laserdiode 3 in einer thermo-elektrisch temperaturstabilisierten Zelle 2, nachfolgend TEC-Zelle genannt. In einer hermetisch abgeschirmten TEC-Zelle 2 befindet sich eine Laserdiode 3, zum Beispiel eine DBR-Diode, eine Kollimationseinheit 4 mit Kollimationsoptik 4',4" gefolgt von einer Mini-Isolatoreinheit 5 und einer Auskopplungseinheit 6. Die Auskopplungseinheit 6 weist insbesondere eine polarisationserhaltende Fasereinkopplungseinheit 7 für die Einkopplung der erzeugten Messstrahlung in eine optische Faser 10 auf und kann optional mittels mindestens einem Strahlteiler, im gezeigten Beispiel genau einem Strahlteiler 8, weitere allgemeine Fasereinkopplungseinheiten, im gezeigten Beispiel eine weitere Fasereinkopplungseinheit 9, zur Einkopplung in weitere Fasern 11, 11* (nicht gezeigt) aufweisen. Falls Strahlteiler verwendet werden, weist die Mini-Isolatoreinheit 5 vorzugsweise zwei Mini-Isolatoren 5',5" auf, welche so angeordnet sind, dass die durch die Laserdiode 3 erzeugte Strahlung dahingehend adaptiert wird, dass eine senkrechte oder parallele Orientierung der Polarisationsebene der Strahlung relativ zu den Strahlteilern, im gezeigten Beispiel dem einen Strahlteiler 8, erzeugt wird. Dies ist insbesondere vorteilhaft, da die Strahlteiler üblicherweise keine polarisationserhaltende Schicht aufweisen.

Ferner ist in Figur 1 eine Kontroll- und Steuerungseinheit 12 angedeutet, vermittels derer die TEC-Zelle 2 kontrolliert wird um vermittels einer Temperaturregulierung durch die TEC-Zelle die Wellenlänge der Messstrahlung 22 zu stabilisieren. Weiter führt die erfindungsgemässe Integration sowohl der Kollimationseinheit 4, der Mini-Isolatoreinheit 5, und der Auskopplungseinheit 6 in die temperaturstabilisierte TEC-Zelle zusätzlich dazu, dass durch die Temperaturregulierung gleichzeitig auch eine optimierte Einkopplungseffizienz der Messstrahlung 22 in die mindestens eine (polarisationserhaltende) Fasereinkopplung 7 der TEC Zelle 2 sichergestellt wird. Eine aktive Steuerung der Strahlrichtung um die Einkopplungseffizienz in die Faser 10 zu halten, ist deshalb nicht erforderlich und der damit reduzierte mechanische und elektronische Aufwand ermöglicht beispielsweise eine weitere Miniaturisierung der Laserstrahlquelle 20 und damit eine Optimierung des Platzbedarfs im Lasertracker 1.

Besonders vorteilhaft sind insbesondere Laserdioden 3 mit Emissionsspektralbereichen, welche im sichtbaren optischen Bereich, insbesondere im "roten Wellenlängenbereich", oder im nahen Infrarotbereich liegen. Beispielsweise kann in einer Ausführung mit einer Emissionswellenlänge im sichtbaren Wellenlängenbereich das emittierte rote Laserlicht der Laserstrahlquelle nicht nur für interferometrische Messungen sondern auch als Markierungslicht verwendet werden. Mit der Erzeugung eines roten Spots auf einem Zielobjekt kann beispielsweise einem Benutzer des Lasertrackers 1 ein Anzielpunkt visuell sichtbar gemacht werden.

Im gezeigten Beispiel sind die temperaturstabilisierte TEC-Zelle 2 und die Kontroll- und Steuerungseinheit der TEC-Zelle 12 ferner in einem einzelnen Gehäuse 13 der Laserstrahlquelle integriert, wobei beispielsweise die Laserstrahlquelle 20 vermittels der Kontroll- und Steuerungseinheit der TEC-Zelle 12 für einen allein stehenden Betrieb vorkalibriert sein kann.

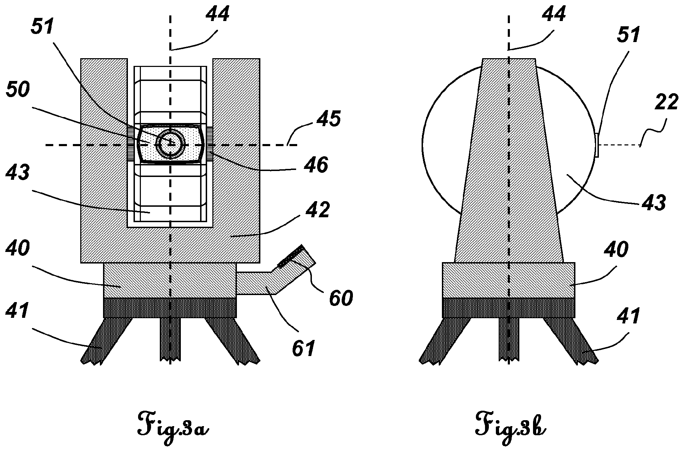

Speziell im Zusammenspiel mit einer allfällig vorhandenen externen Selbstausgleichseinheit 60 (hier nicht gezeigt, siehe Figur 3) für die Initialisierung des Lasertrackers 1, respektive der TEC-Zelle 2, ermöglicht diese Ausführungsform einen modularen Einsatz der Laserstrahlquelle 20 in verschiedenen bevorzugten Ausführungsformen eines Lasertrackersystems, insbesondere hinsichtlich Platzbedarf und optischem sowie elektronischem Aufwand.

Figur 2 zeigt eine erfindungsgemässe optische Anordnung für einen Lasertracker 1 mit einem Interferometer 21 und einer Laserstrahlquelle 20 zur Erzeugung einer Messstrahlung 22 für das Interferometer 21. Die optische Anordnung des Lasertrackers 1 weist dabei eine erfindungsgemässe Laserstrahlquelle 20 und einen Kollimator 23 zur Einkopplung der mit der Laserstrahlquelle 20 erzeugten Laserstrahlung in den Messstrahlengang auf. Die Strahlung wird im gezeigten Aufbau mittels einer optischen Faser 10 von der Laserstrahlquelle 20 zum Kollimator 23 geführt, kann aber alternativ auch direkt oder durch optische Umlenkmittel in den Messstrahlengang eingekoppelt werden.

Die optische Anordnung verfügt zudem über eine Interferometereinheit 21, mittels derer Entfernungsänderungen zum Ziel detektiert und gemessen werden können. Die mit der Strahlquelle 20 erzeugte Strahlung wird als Messstrahlung 22 für das Interferometer 21 benutzt, im Interferometer 21 in einen Referenzpfad und Messpfad aufgespalten und nach Reflexion des Messstrahls am Ziel zusammen mit dem Referenzstrahl an einem Detektor 24 detektiert. Ferner verfügen Lasertracker nach dem Stand der Technik meist noch über zusätzliche Messkomponenten 25, beispielsweise über eine Absolutdistanzmesseinheit, meist mit einer eigenen Strahlquelle, wobei die damit erzeugte Strahlung vermittels eines Strahlteilers zusammen mit der Interferometerstrahlung auf einen gemeinsamen Messstrahlengang geführt werden kann.

Figur 3a zeigt eine beispielhafte Ausführungsform eines erfindungsgemässen Lasertrackers 1 in einer Frontalansicht. Der Lasertracker 1 umfasst eine Basis 40, die auf einer Haltevorrichtung befestigbar ist, hier dargestellt in Form eines Stativs 41. Auf der Basis 40 ist eine Stütze 42 um die Vertikalachse 44 drehbar gelagert angebracht. Die Stütze 42 umfasst einen ersten und einen zweiten Holm, die von einem unteren Teil der Stütze 42 aus nach oben ragen und an welchen eine Strahllenkeinheit 43 mittels einer Welle 46 um die Horizontalachse 45 kippbar gelagert ist. Sowohl die Lagerung der Stütze 42 an der Basis 40 als auch die Lagerung der Strahllenkeinheit 43 an der Stütze 42 ist vorzugsweise als ein Fest-Los-Lager ausgeführt. Achsfehler infolge von Temperatureinflüssen und die daraus resultierenden Genauigkeitsverluste werden so minimiert. Ausserdem ist eine temperaturbedingte Ausdehnung der Welle 46 unkritisch und beeinflusst eine Verspannung des Lagers nicht. Die Verspannung der Lager bleibt dadurch über den gesamten Temperatureinsatzbereich konstant.

An der Strahllenkeinheit 43 können mehrere Optiken vorgesehen sein, wobei im gezeigten Beispiel bloss ein Objektivmodul 50 für die Zielverfolgungsfunktionalität mit einer Laseraussende- und -empfangsoptik 51 einer optischen Distanzmessvorrichtung gezeigt ist.

Die Basis 40 weist vorzugsweise eine Selbstausgleichseinheit 60 für den Selbstausgleich bzw. die Initialisierung des Lasertrackers 1 auf. Diese Selbstausgleichseinheit 60 kann beispielsweise auf einem Auslegearm 61 der Basis 40 angebracht sein und einen oder mehrere Spiegel, Reflektoren und/oder Sensoren enthalten. Besonders vorteilhafte (hier nicht dargestellte) Ausgestaltungen einer Selbstausgleichseinheit 60 sind insbesondere in den Europäischen Patentanmeldungen EP 2 687 866 A1, EP 2 746 806 A1 und EP 2 746 807 A1 ausführlich beschrieben.

Der Lasertracker 1 weist ausserdem eine Auswerte- und Steuereinheit 70 auf. Diese ist hier beispielhaft in der Stütze 42 vorgesehen.

In Figur 3b ist der Lasertracker 1 aus Figur 3a in einer Seitenansicht gezeigt. Auch dieser Ansicht ist der Aufbau des Lasertrackers 1 entnehmbar mit der auf einem Stativ 41 angeordneten Basis 40, der darauf um die Vertikalachse 44 drehbar befestigten Stütze 42 und der an dieser um die Horizontalachse 45 drehbar gelagerten Strahllenkeinheit 43. Dargestellt ist zusätzlich der von der Laseraussende- und - empfangsoptik 51 der optischen Distanzmessvorrichtung emittierte Lasermessstrahl 22.

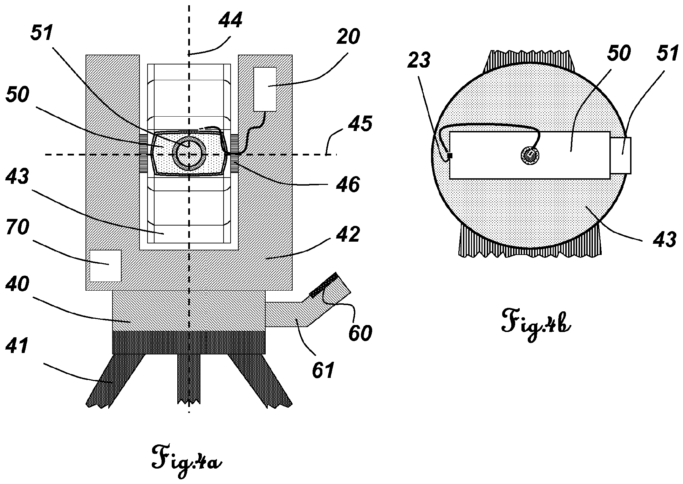

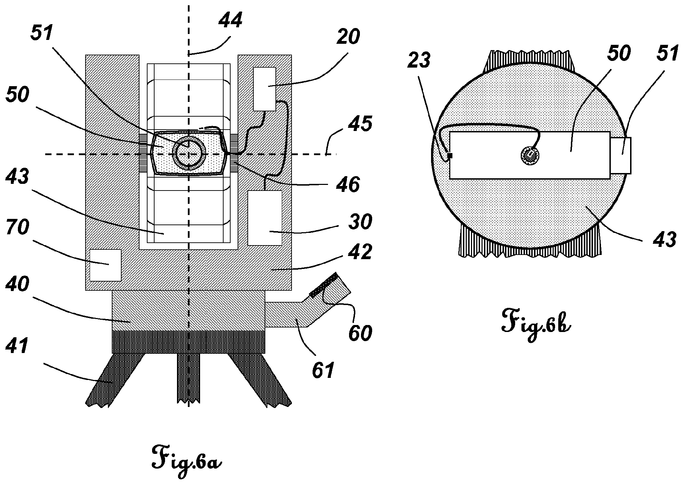

Die Figuren 4 bis 8 zeigen exemplarische Ausführungsformen des Lasertrackers 1 mit möglichen Platzierungen der Laserstrahlquelle 20 in der Stütze 42 oder der Strahllenkeinheit 43, wobei die beispielhaften Ausführungsformen dargestellt in den Figuren 6,7,8 ebenfalls eine Wellenlängenstabilisierungseinheit 30, jeweils beispielsweise angeordnet in der Stütze 42 oder der Strahllenkeinheit, umfassen.

Die Vor- und Nachteile verschiedener Platzierungen der Laserstrahlquelle 20 und/oder der Wellenlängenstabilisierungseinheit 30 ergeben sich hauptsächlich aus Platzgründen oder allenfalls gegebenen Systemspezifikationen oder Vorgaben bezüglich der Wärmeentwicklung einzelner Bestandteile des Lasertrackers, beispielsweise einer maximal erlaubten Temperatur der Strahllenkeinheit 43 um Verbrennungen durch den Benutzer zu verhindern. Beispielsweise werden deshalb Wärme erzeugende Bestandteile, wie gegebenenfalls die Laserstrahlquelle 20, vorzugsweise in der Stütze 42 platziert, da die Strahllenkeinheit 43 oft bereits weitere wärmeentwickelnde Komponenten umfasst.

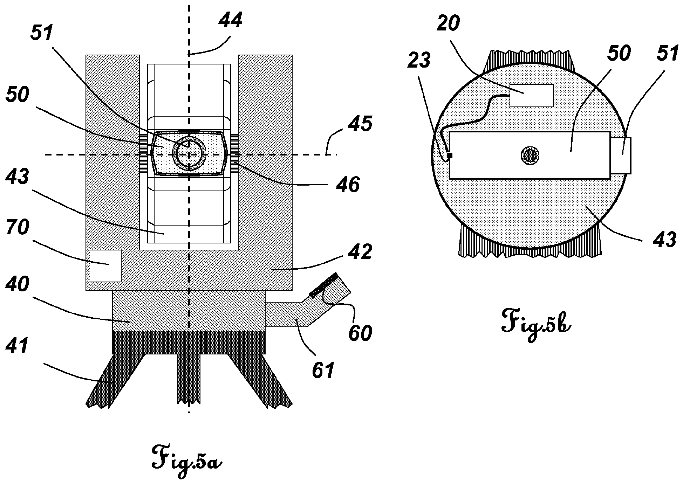

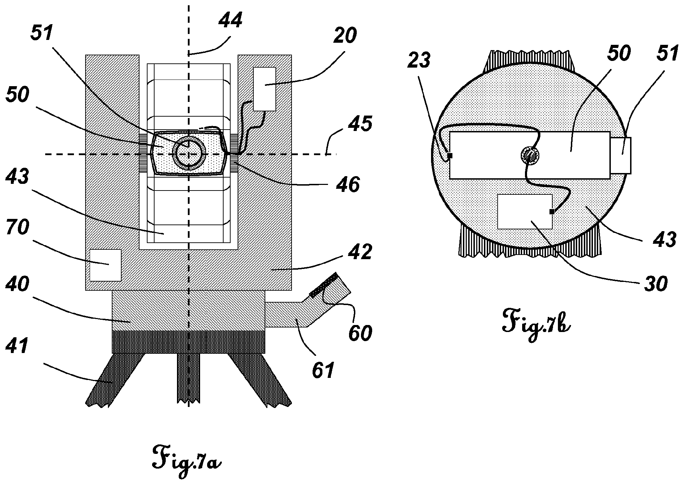

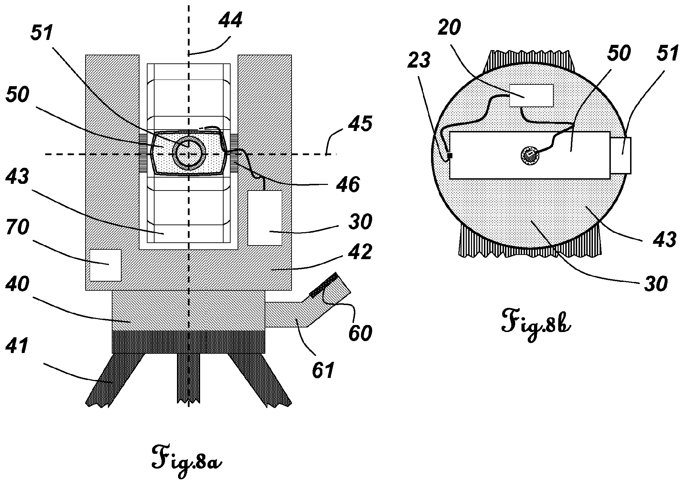

Je nach Anordnung der Laserstrahlquelle 20 in der Stütze 42 (Figuren 4,6,7)oder der Strahllenkeinheit 43 (Figuren 5,8) führt ein Lichtleitersystem von der Laserstrahlquelle 20 durch die Welle 46 hindurch in die Strahllenkeinheit 43 (Figuren 4,6,7) und, falls vorhanden, von der Laserstrahlquelle 20 zu der Wellenlängenstabilisierungseinheit 30, gegebenenfalls ebenfalls durch die Welle 46 hindurch, welche ebenfalls sowohl in der Stütze 42 (Figur 6,8) wie auch in der Strahllenkeinheit 43 (Figur 7) angeordnet sein kann. Der Lasermessstrahl 22 wird somit über das Lichtleitersystem in das Objektivmodul 50 und die Laseraussende- und -empfangsoptik 51 eingekoppelt.

Die Wellenlängenstabilisierungseinheit 30 bewirkt ein weitgehendes Konstant-Halten der Wellenlänge der Laserstrahlung. Die damit stabilisierte Strahlung wird durch das Lichtleitersystem hin zum Interferometer 21 in der Strahllenkeinheit 43 geführt. Aufgrund der so generierten Messstrahlung 22 mit grosser Kohärenzlänge und Wellenlängenstabilität können Messungen von Entfernungsänderungen mit dem Interferometer 21 hochpräzise durchgeführt werden.

Für die Stabilisierung mittels der Wellenlängenstabilisierungseinheit 30 kann sowohl, falls vorhanden, die Zusatzstrahlung der Laserstrahlquelle 20 verwendet werden (wie in den Figuren 6 und 7 dargestellt) oder, beispielsweise über eine Aufspaltung der von der Laserstrahlquelle 20 erzeugten Messstrahlung 22 ausserhalb der Laserstrahlquelle, die Messstrahlung 22 der Laserstrahlquelle 20.

Es versteht sich, dass diese dargestellten Figuren nur mögliche Ausführungsbeispiele schematisch darstellen. Die verschiedenen Ansätze können erfindungsgemäss ebenso miteinander sowie mit Interferometrieverfahren zur Messung von Entfernungsänderungen, mit Verfahren zur Distanzbestimmung und mit gattungsgemässen Messgeräten, insbesondere Lasertrackern, des Stands der Technik kombiniert werden. Die erfindungsgemässen Aspekte können auch Anwendung finden in geodätischen Vermessungsgeräten - wie Totalstationen und Tachymeter.

## Patentansprüche

1. Lasertracker(1) zur fortlaufenden Verfolgung eines reflektierenden Ziels und zur Entfernungsbestimmung zu dem Ziel mit
• einer als Interferometer (21) ausgebildeten Entfernungsmesseinheit zur Bestimmung einer Entfernungsänderung zum Ziel mittels Interferometrie,
• einer als Laserdiode ausgebildeten Laserstrahlquelle (20) zur Erzeugung einer Messstrahlung (22) für das Interferometer (21),
• einer eine Stehachse definierenden Basis (40),
• einer Strahllenkeinheit (43) zur Emission der Messstrahlung und zum Empfang von zumindest einem Teil der am Ziel reflektierten Messstrahlung (22), wobei die Strahllenkeinheit (43) um die Stehachse und eine, insbesondere im Wesentlichen orthogonal zur Stehachse stehende, Neigungsachse relativ zur Basis (40) motorisiert schwenkbar ist,
• einer Winkelmessfunktionalität zur Bestimmung einer Ausrichtung der Strahllenkeinheit (43) relativ zur Basis (40), und
• mindestens einer optischen Faser,
**dadurch gekennzeichnet, dass**
• die Laserstrahlquelle (20) in einer thermo-elektrisch temperaturstabilisierten Zelle (2), nachfolgend TEC-Zelle genannt, integriert ist, wobei mindestens folgende Komponenten innerhalb der TEC-Zelle (2) angeordnet sind
• die Laserdiode (3),
• Kollimationsoptik (4),
• eine optische Mini-Isolatoreinheit (5), und
• eine Auskopplungseinheit (6) aufweisend mindestens eine polarisationserhaltende Fasereinkopplung für die Messstrahlung (7) für das Interferometer (21), und
• die Messstrahlung (22) mittels der Fasereinkopplung in die optische Faser einkoppelbar ist.

2. Lasertracker (1) nach Anspruch 1,
**dadurch gekennzeichnet, dass**
die Emissionswellenlänge der Messstrahlung (22) zwischen 600nm und 700nm, insbesondere zwischen 630nm und 635nm, oder zwischen 850nm und 900nm, insbesondere zwischen 850nm und 855nm oder zwischen 892nm und 896nm, liegt.

3. Lasertracker (1) nach einem der Ansprüche 1 oder 2,
**dadurch gekennzeichnet, dass**
folgende zusätzliche Komponenten innerhalb der TEC-Zelle (2) angeordnet sind,
• mindestens ein Strahlteiler (8) zur Erzeugung der Messstrahlung (22) für das Interferometer (21) und mindestens einer weiteren Zusatzstrahlung, insbesondere einer Referenzstrahlung für das Interferometer (21), und
• mindestens eine zusätzliche Fasereinkopplung (9) für die mindestens eine weitere Zusatzstrahlung,
insbesondere wobei die optische Mini-Isolatoreinheit (5) in der TEC-Zelle (2) zwei Mini-Isolatoren (5',5'') aufweist, welche so angeordnet sind, dass die durch die Laserdiode (3) erzeugte Strahlung dahingehend adaptiert wird, dass eine senkrechte oder parallele Orientierung der Polarisationsebene der Strahlung relativ zum mindestens einen Strahlteiler (8) erzeugt wird.

4. Lasertracker (1) nach einem der vorherigen Ansprüche,
**dadurch gekennzeichnet, dass**
die TEC-Zelle (2) der Laserstrahlquelle (20) vermittels einer Kontroll- und Steuerungseinheit (12) kontrolliert wird, welche eine vordefinierte optimierte Einkopplungseffizienz der Messstrahlung (22) in die mindestens eine Fasereinkopplung (7) der TEC Zelle (2) sicherstellt, insbesondere vermittels einer Temperaturregulierung der TEC-Zelle (2),
insbesondere wobei die TEC-Zelle (2) und die Kontroll- und Steuerungseinheit der TEC-Zelle (12) in einem einzelnen Gehäuse der Laserstrahlquelle (13) integriert sind und die Laserstrahlquelle (20) vermittels der Kontroll- und Steuerungseinheit der TEC-Zelle (12) für einen allein stehenden Betrieb vorkalibriert ist.

5. Lasertracker (1) nach einem der vorherigen Ansprüche,
**dadurch gekennzeichnet, dass**
die Laserdiode (3) ausgestaltet ist als eine Bragg-Spiegel-Laserdiode (DBR-Laserdiode) oder als eine Fabry-Perot-Laserdiode mit nachgeschaltetem volumen-holographischen Gitter (VHG), oder als ein Oberflächenemitter (VCSEL).

6. Lasertracker (1) nach einem der vorhergehenden Ansprüche,
**dadurch gekennzeichnet, dass**
die Messstrahlung (22) und/oder die mindestens eine Zusatzstrahlung vermittels optischer Fasern führbar sind, insbesondere wobei die durch die Laserstrahlquelle (20) erzeugbaren Strahlungen in optische Fasern eingekoppelt werden.

7. Lasertracker (1) nach einem der vorhergehenden Ansprüche,
**dadurch gekennzeichnet, dass**
der Lasertracker (1) eine Wellenlängenstabilisierungseinheit (30) zur Stabilisierung der von der Laserstrahlquelle (20) erzeugten Messstrahlung (22) aufweist, sodass die Emissionswellenlänge fortlaufend innerhalb eines definierten Wellenlängenbereichs vorliegt, insbesondere wobei die Wellenlängenstabilisierungseinheit (30) als Absorptionszelle ausgebildet ist, insbesondere wobei der Lasertracker (1) eine optische Verbindungsfaser zur Verbindung der Wellenlängenstabilisierungseinheit (30) mit der Laserstrahlquelle (20) aufweist.

8. Lasertracker (1) nach einem der vorherigen Ansprüche,
**dadurch gekennzeichnet, dass**
der Lasertracker (1) eine um die Stehachse relativ zur Basis (40) schwenkbare Stütze (42) aufweist und die Strahllenkeinheit (43) als um die Neigungsachse relativ zur Stütze (42) schwenkbare Anzieleinheit ausgebildet ist.

9. Lasertracker (1) nach Anspruch 8,
**dadurch gekennzeichnet, dass**
die Laserstrahlquelle (20) in der Anzieleinheit (43) angeordnet ist,
insbesondere wobei die Wellenlängenstabilisierungseinheit (30) in der Stütze (42) angeordnet ist, wobei die Messstrahlung (22) und/oder die mindestens eine Zusatzstrahlung mittels optischer Fasern in die Stütze (42) einkoppelbar sind.

10. Lasertracker (1) nach Anspruch 8,
**dadurch gekennzeichnet, dass**
die Laserstrahlquelle (20) in der Stütze (42) angeordnet ist, wobei die Messstrahlung (22) und/oder die mindestens eine Zusatzstrahlung mittels optischer Fasern in die Anzieleinheit (43) einkoppelbar sind, insbesondere wobei die Wellenlängenstabilisierungseinheit (30) in der Stütze (42) angeordnet ist, wobei die Messstrahlung (22) und/oder die mindestens eine Zusatzstrahlung mittels optischer Fasern in die Anzieleinheit (43) einkoppelbar sind.

11. Verfahren zum Bestimmen einer Entfernungsänderung zu einem Ziel mittels Interferometrie mit einem Lasertracker (1) mit
• einer eine Stehachse definierenden Basis (40),
• einer Strahllenkeinheit (43) zum Emittieren einer Messstrahlung (22) und zum Empfangen von zumindest einem Teil der am Ziel reflektierten Messstrahlung (22), wobei die Strahllenkeinheit (43) um die Stehachse und eine im Wesentlichen orthogonal zur Stehachse stehende Neigungsachse relativ zur Basis (40) motorisiert schwenkbar ist,
• einer als Interferometer (21) ausgebildeten Entfernungsmesseinheit zum Bestimmen einer Entfernungsänderung zum Ziel mittels Interferometrie,
• einer als Laserdiode (3) ausgebildeten Interferometer-Laserstrahlquelle (20) zum Erzeugen der Messstrahlung (22) für das Interferometer (21), und
• mindestens einer optischen Faser
sowie mit
• einem Emittieren der Messstrahlung (22),
• einem Empfangen des zumindest einen Teils der am Ziel reflektierten Messstrahlung (22) und
• dem Bestimmen der relativen Entfernung,
**dadurch gekennzeichnet, dass**
• die Laserstrahlquelle (20) in einer thermo-elektrisch temperaturstabilisierten Zelle (2), nachfolgend TEC-Zelle genannt, integriert ist, wobei mindestens folgende Komponenten innerhalb der TEC-Zelle (2) angeordnet sind
• eine Laserdiode (3),
• Kollimationsoptik (4),
• eine optische Mini-Isolatoreinheit (5), und
• eine Auskopplungseinheit (6) aufweisend mindestens eine polarisationserhaltende Fasereinkopplung (7) für die Messstrahlung (22) für das Interferometer (21), und
• die Messstrahlung (22) mittels der Fasereinkopplung in die optische Faser einkoppelbar ist.

12. Verfahren nach Anspruch 11,
**dadurch gekennzeichnet, dass**
ein Stabilisieren der von der Laserstrahlquelle (20) erzeugten Messstrahlung (22) derart erfolgt, dass die Emissionswellenlänge fortlaufend innerhalb eines definierten Toleranzbereichs für die Wellenlänge vorliegt.

## Claims

1. Laser tracker (1) for progressive tracking of a reflective target and for determining the distance to the target having
- a distance measuring unit, which is configured as an interferometer (21), for determining a distance change to the target by means of interferometry,
- a laser beam source (20), which is configured as a laser diode, for generating measuring radiation (22) for the interferometer (21),
- a base (40), which defines a standing axis,
- a beam guiding unit (43) for emitting the measuring radiation and for receiving at least a part of the measuring radiation (22) reflected on the target, wherein the beam guiding unit (43) is pivotable by a motor about the standing axis and an inclination axis, which is in particular essentially orthogonal in relation to the standing axis, in relation to the base (40),
- an angle measuring functionality for determining an alignment of the beam guiding unit (43) in relation to the base (40), and
- at least one optical fiber,
**characterized in that** the laser beam source (20) is integrated into a thermo-electrically temperature-stabilized cell (2), referred to as a TEC cell hereafter, wherein at least the following components are arranged inside the TEC cell (2)
- the laser diode (3),
- collimation optics (4),
- an optical mini-isolator unit (5), and
- a decoupling unit (6) comprising at least one polarization-retaining fiber coupling for the measuring radiation (7) for the interferometer (21, and
the measuring radiation (22) can be coupled into the optical fiber by the fiber coupling.

2. Laser tracker (1) according to Claim 1,
**characterized in that** the emission wavelength of the measuring radiation (22) is between 600 nm and 700 nm, in particular between 630 nm and 635 nm, or between 850 nm and 900 nm, in particular between 850 nm and 855 nm or between 892 nm and 896 nm.

3. Laser tracker (1) according to any one of Claims 1 or 2,
**characterized in that** the following additional components are arranged inside the TEC cell (2),
- at least one beam splitter (8) for generating the measuring radiation (22) for the interferometer (21) and at least one further auxiliary radiation, in particular a reference radiation for the interferometer (21), and
- at least one additional fiber coupling (9) for the at least one further auxiliary radiation,
in particular wherein the optical mini-isolator unit (5) in the TEC cell (2) comprises two mini-isolators (5', 5"), which are arranged that the radiation generated by the laser diode (3) is adapted such that a perpendicular or parallel orientation of the polarization plane of the radiation is generated in relation to the at least one beam splitter (8).

4. Laser tracker (1) according to any one of the preceding claims,
**characterized in that** the TEC cell (2) of the laser beam source (20) is monitored by means of a monitoring and control unit (12), which ensures a predefined optimum coupling efficiency of the measuring radiation (22) into the at least one fiber coupling (7) of the TEC cell (2), in particular by means of a temperature regulation of the TEC cell (2),
in particular wherein the TEC cell (2) and the monitoring and control unit of the TEC cell (12) are integrated into a single housing of the laser beam source (13) and the laser beam source (20) is pre-calibrated by means of the monitoring and control unit of the TEC cell (12) for standalone operation.

5. Laser tracker (1) according to any one of the preceding claims,
**characterized in that** the laser diode (3) is configured as a Bragg mirror laser diode (DBR laser diode) or as a Fabry-Perot laser diode having downstream volume holographic lattice (VHG), or as a surface emitter (VCSEL).

6. Laser tracker (1) according to any one of the preceding claims,
**characterized in that** the measuring radiation (22) and/or the at least one auxiliary radiation can be guided by means of optical fibers, in particular wherein the radiations which can be generated by the laser beam source (20) are coupled into optical fibers.

7. Laser tracker (1) according to any one of the preceding claims,
**characterized in that** the laser tracker (1) comprises a wavelength stabilization unit (30) for stabilizing the measuring radiation (22) generated by the laser beam source (20), so that the emission wavelength is continuously present within a defined wavelength range, in particular wherein the wavelength stabilization unit (30) is configured as an absorption cell, in particular wherein the laser tracker (1) comprises an optical connection fiber for connecting the wavelength stabilization unit (30) to the laser beam source (20) .

8. Laser tracker (1) according to any one of the preceding claims,
**characterized in that** the laser tracker (1) comprises a support (42), which is pivotable about the standing axis in relation to the base (40), and the beam guiding unit (43) is configured as a targeting unit, which is pivotable about the inclination axis in relation to the support (42).

9. Laser tracker (1) according to Claim 8,
**characterized in that** the laser beam source (20) is arranged in the targeting unit (43),
in particular wherein the wavelength stabilization unit (30) is arranged in the support (42), wherein the measuring radiation (22) and/or the at least one auxiliary radiation can be coupled by means of optical fibers into the support (42).

10. Laser tracker (1) according to Claim 8,
**characterized in that** the laser beam source (20) is arranged in the support (42), wherein the measuring radiation (22) and/or the at least one auxiliary radiation can be coupled by means of optical fibers into the targeting unit (43), in particular wherein the wavelength stabilization unit (30) is arranged in the support (42), wherein the measuring radiation (22) and/or the at least one auxiliary radiation can be coupled by means of optical fibers into the targeting unit (43).

11. Method for determining a distance change to a target by means of interferometry using a laser tracker (1) having
- a base (40), which defines a standing axis,
- a beam guiding unit (43) for emitting a measuring radiation (22) and for receiving at least a part of the measuring radiation (22) reflected on the target, wherein the beam guiding unit (43) is pivotable by a motor about the standing axis and an inclination axis, which is essentially orthogonal in relation to the standing axis, in relation to the base (40),
- a distance measuring unit, which is configured as an interferometer (21), for determining a distance change to the target by means of interferometry,
- an interferometer laser beam source (20), which is configured as a laser diode (3), for generating the measuring radiation (22) for the interferometer (21), and
- at least one optical fiber
and having
- an emission of the measuring radiation (22),
- a reception of the at least one part of the measuring radiation (22) reflected on the target, and
- the determination of the relative distance,
**characterized in that** the laser beam source (20) is integrated into a thermo-electrically temperature-stabilized cell (2), referred to as a TEC cell hereafter, wherein at least the following components are arranged inside the TEC cell (2)
- a laser diode (3),
- collimation optics (4),
- an optical mini-isolator unit (5), and
- a decoupling unit (6) comprising at least one polarization-retaining fiber coupling (7) for the measuring radiation (22) for the interferometer (21), and
the measuring radiation (22) can be coupled into the optical fiber by the fiber coupling.

12. Method according to Claim 12,
**characterized in that** a stabilization of the measuring radiation (22) generated by the laser beam source (20) is performed such that the emission wavelength is continuously present within a defined tolerance range for the wavelength.

## Revendications

1. Laser tracker (1) destiné à poursuivre en continu une cible réfléchissante et à déterminer la distance par rapport à ladite cible, avec
• une unité de mesure de distance conçue sous la forme d'un interféromètre (21) et destinée à déterminer par interférométrie une variation de distance par rapport à la cible,
• une source de rayonnement laser (20) conçue sous la forme d'une diode laser et destinée à produire un rayonnement de mesure (22) pour l'interféromètre (21),
• une base (40) définissant un axe vertical,
• une unité de guidage de rayon (43) destinée à émettre le rayonnement de mesure et à recevoir au moins une partie du rayonnement de mesure (22) réfléchi par la cible, ladite unité de guidage de rayon (43) pouvant pivoter de manière motorisée par rapport à la base (40) autour de l'axe vertical et autour d'un axe d'inclinaison, notamment essentiellement orthogonal à l'axe vertical,
• une fonctionnalité de mesure d'angle destinée à déterminer une orientation de l'unité de guidage de rayon (43) par rapport à la base (40), et
• au moins une fibre optique,
**caractérisé en ce que**
• la source de rayonnement laser (20) est intégrée à une cellule (2) dont la température est stabilisée par voie thermo-électrique, ci-après désignée cellule TEC, au moins les composants suivants étant disposés dans la cellule TEC (2)
∘ la diode laser (3),
∘ une optique de collimation (4),
∘ une unité miniature d'isolation optique (5), et
∘ une unité de découplage (6) présentant au moins un couplage de fibre (7) maintenant une polarisation pour le rayonnement de mesure (22) pour l'interféromètre (21), et
• le rayonnement de mesure (22) peut être couplé dans la fibre optique au moyen du couplage de fibre.

2. Laser tracker (1) selon la revendication 1,
**caractérisé en ce que**
la longueur d'onde d'émission du rayonnement de mesure (22) se situe entre 600 nm et 700 nm, notamment entre 630 nm et 635 nm, ou entre 850 nm et 900 nm, notamment entre 850 nm et 855 nm ou entre 892 nm et 896 nm.

3. Laser tracker (1) selon l'une des revendications 1 et 2,
**caractérisé en ce que**
les composants supplémentaires suivants sont disposés dans la cellule TEC (2) :
• au moins un séparateur de rayon (8) destiné à produire le rayonnement de mesure (22) pour l'interféromètre (21) et au moins un autre rayonnement supplémentaire, notamment un rayonnement de référence pour l'interféromètre (21), et
• au moins un couplage de fibre supplémentaire (9) pour l'au moins un autre rayonnement supplémentaire,
notamment l'unité miniature d'isolation optique (5) disposée dans la cellule TEC (2) présentant deux isolateurs miniatures (5', 5"), qui sont disposés de manière à modifier le rayonnement produit par la diode laser (3) en vue d'obtenir une orientation perpendiculaire ou parallèle du plan de polarisation du rayonnement par rapport à l'au moins un séparateur de rayon (8).

4. Laser tracker (1) selon l'une des revendications précédentes,
**caractérisé en ce que**
la cellule TEC (2) de la source de rayonnement laser (20) est contrôlée au moyen d'une unité de contrôle et de commande (12), qui garantit une efficacité de couplage optimisée prédéfinie du rayonnement de mesure (22) dans l'au moins un couplage de fibre (7) de la cellule TEC (2), notamment au moyen d'une régulation de la température de la cellule TEC (2),
notamment la cellule TEC (2) et l'unité de contrôle et de commande (12) de la cellule TEC étant intégrées dans un boîtier unique (13) de la source de rayonnement laser et la source de rayonnement laser (20) étant préétalonnée pour un fonctionnement autonome au moyen de l'unité de contrôle et de commande (12) de la cellule TEC.

5. Laser tracker (1) selon l'une des revendications précédentes,
**caractérisé en ce que**
la diode laser (3) est conçue sous la forme d'une diode laser à miroir de Bragg (diode laser à réseau de Bragg) ou sous la forme d'une diode laser à cavité de Fabry-Pérot avec réseau par holographie de volume en aval, ou sous la forme d'une diode laser à cavité verticale émettant par la surface (VCSEL).

6. Laser tracker (1) selon l'une des revendications précédentes,
**caractérisé en ce que**
le rayonnement de mesure (22) et/ou l'au moins un rayonnement supplémentaire peuvent être guidés au moyen de fibres optiques, notamment les rayonnements susceptibles d'être produits par la source de rayonnement laser (20) étant couplés dans des fibres optiques.

7. Laser tracker (1) selon l'une des revendications précédentes,
**caractérisé en ce que**
le Laser tracker (1) présente une unité de stabilisation des longueurs d'onde (30) destinée à stabiliser le rayonnement de mesure (22) produit par la source de rayonnement laser (20), afin que la longueur d'onde d'émission reste constamment dans un domaine défini de longueur d'onde, l'unité de stabilisation des longueurs d'onde (30) étant notamment conçue sous la forme d'une cellule d'absorption, le laser tracker (1) présentant notamment une fibre optique de liaison destinée à relier l'unité de stabilisation des longueurs d'onde (30) et la source de rayonnement laser (20).

8. Laser tracker (1) selon l'une des revendications précédentes,
**caractérisé en ce que**
le laser tracker (1) présente un support (42) pouvant pivoter par rapport à la base (40) autour de l'axe vertical et l'unité de guidage de rayon (43) est conçue sous la forme d'une unité de visée pouvant pivoter par rapport au support (42) autour de l'axe d'inclinaison.

9. Laser tracker (1) selon la revendication 8,
**caractérisé en ce que**
la source de rayonnement laser (20) est disposée dans l'unité de visée (43),
notamment dans lequel l'unité de stabilisation des longueurs d'onde (30) est disposée dans le support (42), le rayonnement de mesure (22) et/ou l'au moins un rayonnement supplémentaire pouvant être couplés au moyen de fibres optiques dans le support (42).

10. Laser tracker (1) selon la revendication 8,
**caractérisé en ce que**
la source de rayonnement laser (20) est disposée dans le support (42), le rayonnement de mesure (22) et/ou l'au moins un rayonnement supplémentaire pouvant être couplés au moyen de fibres optiques dans l'unité de visée (43), notamment l'unité de stabilisation des longueurs d'onde (30) étant disposée dans le support (42), le rayonnement de mesure (22) et/ou l'au moins un rayonnement supplémentaire pouvant être couplés au moyen de fibres optiques dans l'unité de visée (43).

11. Procédé de détermination par interférométrie d'une variation de distance par rapport à une cible au moyen d'un laser tracker (1) avec
• une base (40) définissant un axe vertical,
• une unité de guidage de rayon (43) destinée à émettre un rayonnement de mesure (22) et à recevoir au moins une partie du rayonnement de mesure (22) réfléchi par la cible, ladite unité de guidage de rayon (43) pouvant pivoter de manière motorisée par rapport à la base (40) autour de l'axe vertical et autour d'un axe d'inclinaison essentiellement orthogonal à l'axe vertical,
• une unité de mesure de distance conçue sous la forme d'un interféromètre (21) et destinée à déterminer par interférométrie une variation de distance par rapport à la cible,
• une source de rayonnement laser d'interféromètre (20) conçue sous la forme d'une diode laser (3) et destinée à produire un rayonnement de mesure (22) pour l'interféromètre (21), et
• au moins une fibre optique
et avec
• une émission du rayonnement de mesure (22),
• une réception de l'au moins une partie du rayonnement de mesure (22) réfléchi par la cible et
• la détermination de la distance relative,
**caractérisé en ce que**
• la source de rayonnement laser (20) est intégrée à une cellule (2) dont la température est stabilisée par voie thermo-électrique, ci-après désignée cellule TEC, au moins les composants suivants étant disposés dans la cellule TEC (2)
∘ une diode laser (3),
∘ une optique de collimation (4),
∘ une unité miniature d'isolation optique (5), et
∘ une unité de découplage (6) présentant au moins un couplage de fibre (7) maintenant une polarisation pour le rayonnement de mesure (22) pour l'interféromètre (21), et
• le rayonnement de mesure (22) peut être couplé dans la fibre optique au moyen du couplage de fibre.

12. Procédé selon la revendication 11,
**caractérisé en ce que**
il se produit une stabilisation du rayonnement de mesure (22) produit par la source de rayonnement laser (20) de sorte que la longueur d'onde d'émission reste constamment dans un domaine de tolérance défini pour la longueur d'onde.
